# FASCICULE DE BREVET EUROPEEN

(11) **EP 1 301 740 B1**
(45) Date de publication et mention de la délivrance du brevet: **29.09.2004**
(21) Numéro de dépôt: 01955432.8
(22) Date de dépôt: 17.07.2001
(51) Int. Cl.: F16L 55/28

(54) **ROBOT MOBILE APTE A TRAVAILLER DANS DES TUYAUX OU D'AUTRES PASSAGES ETROITS**
MOBILER ROBOTER ZUR AUSFÜHRUNG VON ARBEITEN IN ROHRLEITUNGEN ODER ANDEREN ENGEN PASSAGEN
ROBOT VEHICLE ADAPTED TO OPERATE IN PIPELINES AND OTHER NARROW PASSAGES

(30) Priorité: 18.07.2000 FR 0009387
(43) Date de publication de la demande: 16.04.2003
(73) Titulaire: COMMISSARIAT A L'ENERGIE ATOMIQUE, 75015 Paris Cédex 15 (FR)
(72) Inventeur: PERROT, Yann, F-91700 Sainte Geneviève des Bois (FR); DAVID, Olivier, F-91120 Palaiseau (FR)
(74) Mandataire: Ilgart, Jean-Christophe
(86) Numéro de dépôt international: PCT/FR2001/002324
(87) Numéro de publication internationale: WO 2002/006720

(56) Documents cités:
- FR-A- 2 724 458
- US-A- 4 481 816
- US-A- 4 852 391
- US-A- 5 878 783

## Description

Le domaine de l'invention est celui des robots mobiles pour le travail, l'inspection ou plus généralement le déplacement à l'intérieur de tuyauteries ou d'autres passages étroits, tels que décrits dans US-A- 5 878 783.

On connaît des robots composés d'un petit véhicule ou d'un module inerte mais poussé par derrière pour pénétrer dans des tuyauteries et y accomplir certains travaux ou des inspections. On peut cependant être embarrassé quand il faut que ces robots franchissent des coudes de la tuyauterie, car ils ne doivent pas être trop longs sous peine de se coincer. Un remède possible consiste à construire le robot en un train de modules formé de manière à être souple, mais il devient alors difficile d'arrêter et de maintenir le robot à un endroit précis de la tuyauterie, et plus encore de l'y fixer de manière qu'il reste immobile malgré des efforts importants qu'il peut transmettre à la tuyauterie, et subir par réaction, au cours de certains travaux comme l'usinage de l'intérieur de la tuyauterie.

L'invention offre une solution à ce problème : elle a trait à un robot mobile en coulissant dans une tuyauterie ou un autre passage étroit, composé d'un train de modules reliés par des liaisons souples, et caractérisé en ce qu'il comprend des moyens de solidarisation des modules.

Ainsi, le robot est souple pour franchir les coudes des tuyauteries, mais devient rigide à volonté et est alors susceptible d'être retenu fermement dans la tuyauterie et de fournir une bonne résistance. L'inhibition des liaisons souples produit avant tout un raidissement du train contre les flexions.

Certaines réalisations favorables de l'invention donnent la faculté de maintenir le robot à un endroit choisi de la tuyauterie, en commandant des mécanismes appropriés. Il est alors possible et avantageux de pourvoir le robot de mécanismes de libération manuelle qui permettent de commander manuellement la rétraction des mécanismes de maintien pour rendre le robot mobile de nouveau même si une commande directe des moteurs des mécanismes de maintien échoue.

Un travail particulier consiste à assembler successivement des tronçons de tuyauterie mis bout à bout ; le robot de l'invention peut l'accomplir s'il est construit de sorte que deux portions d'un module antérieur peuvent être approchées l'une de l'autre, une de ces portions étant maintenue sur le tronçon libre et l'autre étant solidaire de la longueur déjà assemblée de la tuyauterie.

D'autres éléments importants de l'invention et notamment des moyens concrets pour assurer les fonctions exposées seront décrits en détail en référence aux figures ci-dessous :
- la figure 1 est une vue générale du robot,
- la figure 2 est une vue d'un module de propulsion,
- la figure 3 est une vue d'un module de maintien,
- la figure 4 représente le système de raidissage du train,
- la figure 5 est une vue d'un module antérieur,
- la figure 6 illustre l'encastrement du module antérieur à la tuyauterie,
- la figure 7 illustre le mécanisme de libération forcée du module antérieur,
- la figure 8 représente un autre genre de moyen de maintien pour un module,
- la figure 9 illustre un train composé de tels modules,
- la figure 10 illustre un cas d'emploi de l'invention,
- et les figures 11A et 11B représentent un module porteur d'un outil d'usinage.

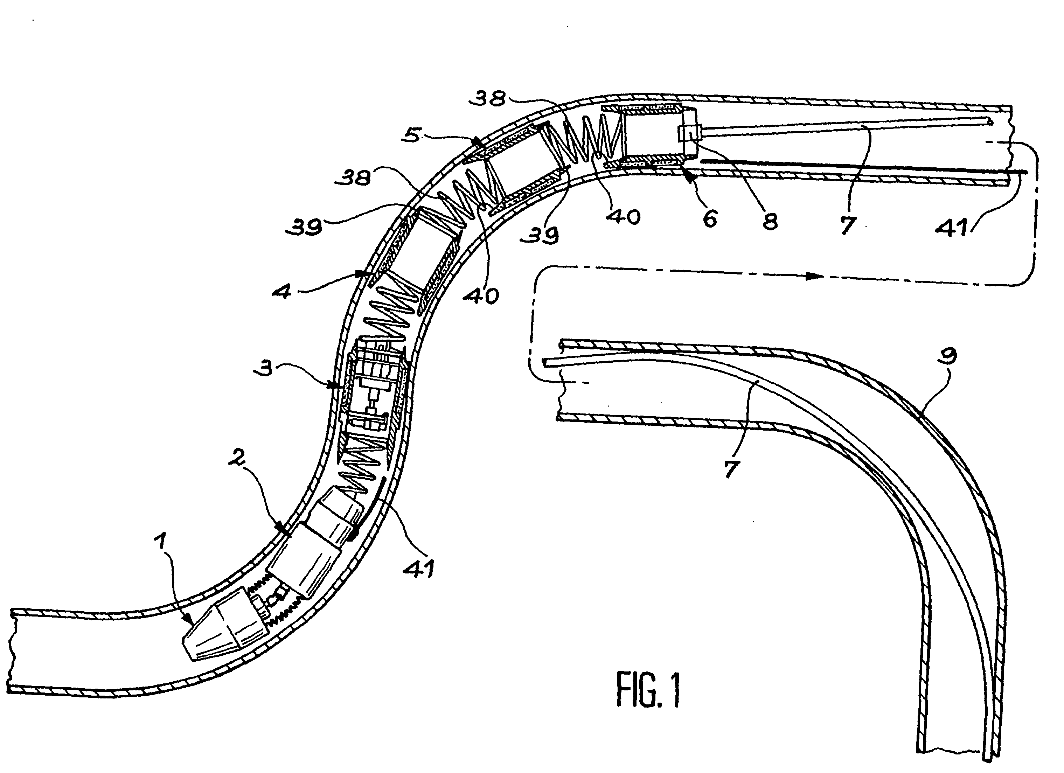

La réalisation de l'invention qu'on représente à la figure 1, dans un coude d'une tuyauterie, comprend cinq modules numérotés de 2 à 6 de la tête à la queue : le module de tête ou antérieur est un module d'alignement 2 permettant au robot 1 de se frayer un chemin dans la tuyauterie ; le module suivant est un module d'outil 3 portant un outil de travail ; le suivant est un module de puissance 4 fournissant de l'énergie au précédent ; le quatrième est un module de fonctions annexes 5 ; et le module de queue ou postérieur est dans cette réalisation un module d'encastrement 6. Ni le nombre ni la fonction des modules ne caractérisent le robot de l'invention ou ne restreignent la portée de celle-ci, car il est évident que l'invention pourrait être mise en oeuvre avec des robots différents. En particulier, un module de propulsion qu'on décrira un peu plus tard pourrait être ajouté en queue. Dans la réalisation présente, il serait cependant superflu car on a prévu de pousser le robot 1 dans la tuyauterie au moyen d'un jonc flexible 7 accroché à l'arrière du module de queue par une sertissure 8. Le jonc 7 est flexible en des coudes de la tuyauterie, mais il transmet fidèlement les forces longitudinales qui lui sont imposées et fait donc avancer le robot 1. Il tend à se déformer à l'angle de courbure le plus grand possible dans un coude, en se décollant de l'extrados, selon le schéma de la partie de droite de la figure 1, à l'endroit 9. On peut donc calculer assez facilement l'enfoncement du robot 1 en fonction de la longueur de jonc ayant pénétré dans la tuyauterie.

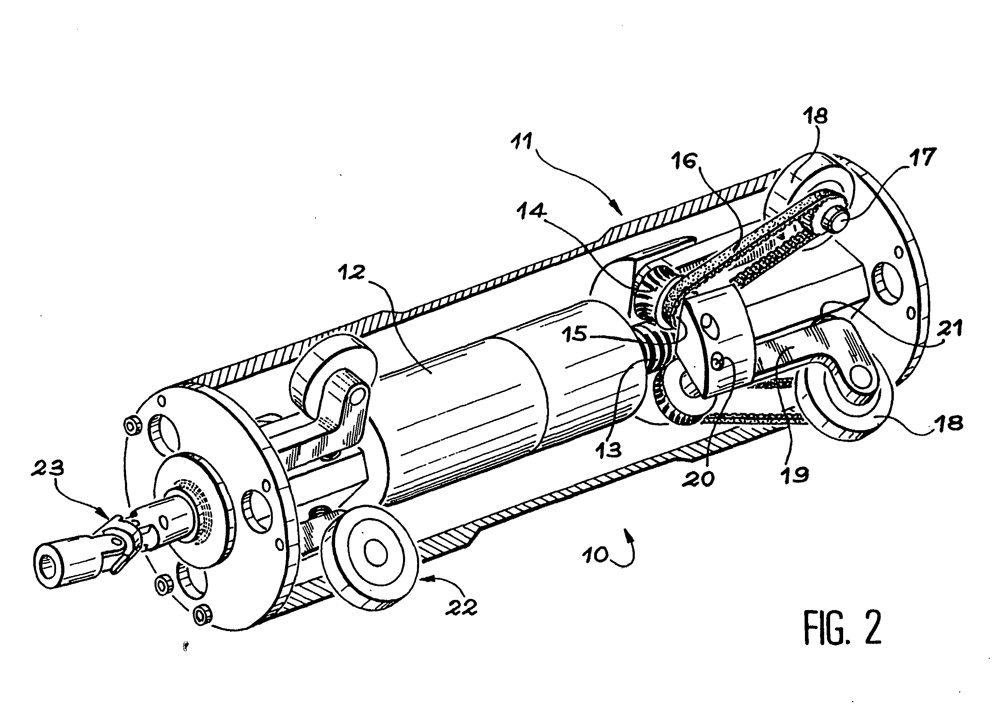

On passe à la figure 2 pour montrer un module de propulsion 10 autonome. Son enveloppe 11 contient un moteur 12 dont l'arbre 13 est une vis entraînant trois roues dentées 14. Chacune d'elles entraîne une poulie 15 qui lui est coaxiale et, par l'intermédiaire d'une courroie 16, une autre poulie 17 solidaire d'une roulette 18. Les roulettes 18 sont réparties à 120° autour d'une circonférence arrière de l'enveloppe 11 et sont placées au bout de leviers 19 articulés autour d'un axe 20 à leur extrémité opposée et écartés mutuellement par des ressorts 21, de manière à éloigner les roulettes 18 de l'enveloppe 11 jusqu'à ce qu'elles soient pressées sur la paroi de la tuyauterie. Un autre système semblable déployables de roulettes, référencé globalement par 22, est placé à l'avant du module de propulsion 10, sauf que ces roulettes-ci ne sont pas motrices et ne servent donc qu'à compléter le centrage du module 10 dans la tuyauterie. Un double cardan 23 relie le module 10 à l'arrière du module d'encastrement 6 afin qu'un défaut d'alignement radial puisse être accepté entre eux. Comme le moteur 12 est plutôt long mais fin, l'enveloppe 11 a une forme creusée au centre qui lui permet de passer à travers des coudes plus aigus malgré sa longueur.

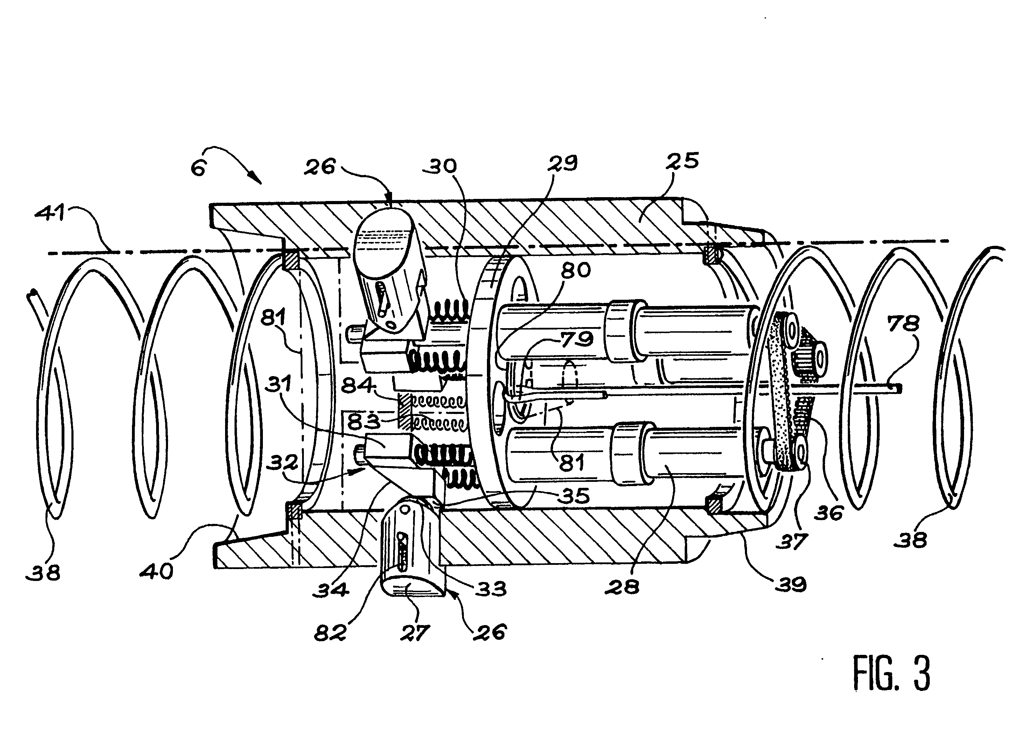

Deux modules au moins présentent un système d'encastrement ou de maintien dans la tuyauterie qu'on va maintenant décrire : l'un d'eux est le module d'encastrement 6 complètement illustré à la figure 3 ; son enveloppe 25 est percée de trois trous concentriques pour le passage de doigts 26 respectifs orientés de façon divergente et se finissant sur une surface d'appui 27 à la tuyauterie. L'enveloppe 25 entoure trois moteurs 28, fixés à une plaque de support 29 commune et qui font tourner des vis 30 chargées de faire avancer des cames taraudées 31, dont des surfaces de came 32 repoussent des faces de fond 33 des doigts 26. Les surfaces de came 32 ne sont pas des surfaces en coin simple, mais comprennent au moins deux pentes, la première 34 étant plus inclinée et permettant de repousser rapidement les doigts 26 alors que l'autre surface 35 est peu inclinée et sert à mieux régler l'effort de pression des doigts 26 sur la tuyauterie. Les rotations des moteurs 28 sont synchronisées au moyen d'une courroie 36 tendue en triangle sur trois pignons 37 aux extrémités des vis 30 de l'autre côté des moteurs 28. En variante, on pourrait n'avoir qu'un seul moteur pour commander les trois vis 30 à la fois au moyen de transmission séparées.

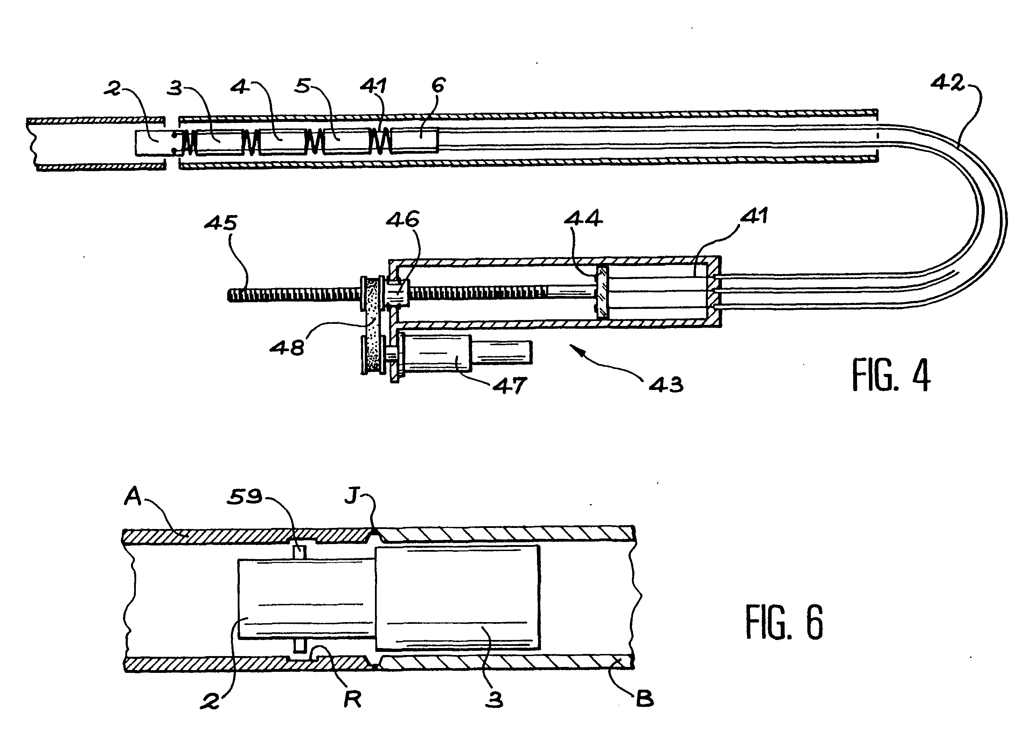

Un aspect essentiel de l'invention va aussi être décrit au moyen de cette figure 3, ainsi que de la figure 4 : il s'agit des moyens de liaison et de connexion des modules 2 à 6 du train, qui comprennent des ressorts hélicoïdaux 38 fixés entre deux modules consécutifs, et, sur l'enveloppe de chacun des modules, une face extérieure conique mâle 39 à l'arrière et une face conique intérieure femelle 40 à l'avant. Ne fait exception que le module d'alignement 2 dont l'avant a une forme spéciale pour permettre au robot 1 de se frayer commodément son chemin. Les ressorts 38 sont associés à des câbles de raidissage 41 qui traversent tous les modules 2 à 6 en s'étendant jusqu'au module d'alignement 2, à l'arrière duquel ils sont accrochés. On trouve en réalité trois câbles de raidissage 41 répartis uniformément sur une circonférence pour une transmission équilibrée de l'effort. A l'arrière du module d'encastrement 6, les câbles de raidissage 41 coulissent dans des gaines 42 qui s'étendent jusqu'à un mécanisme de traction 43 comprenant une tablette 44 à laquelle sont accrochées les extrémités dénudées des câbles de raidissage 41, une vis 45 au bout de laquelle est fixée la tablette 44, un écrou 46 engagé sur la vis 45, et un moteur 47 faisant tourner l'écrou 46 par une transmission à poulie et courroie 48 : la vis 45 coulisse, entraînant la tablette 44 de manière à tirer le module d'alignement 2 vers l'arrière. Mais si le module d'encastrement 6 est maintenu sur la tuyauterie par des doigts 26 déployés, il reste immobile, les autres modules 2 à 5 se rapprochent de lui et tout le train se contracte, jusqu'à ce que les surfaces coniques mâles 39 pénètrent dans les surfaces coniques femelles 40 que les modules 2 à 6 consécutifs se joignent en formant un élément de robot unique et compact de grande résistance, et surtout incapable de fléchir. Quand les câbles de raidissage 41 sont relâchés, les ressorts 38 peuvent se détendre et le train reprend alors sa souplesse. Dans une variante non représentée, un dispositif de tension de câble est embarqué.

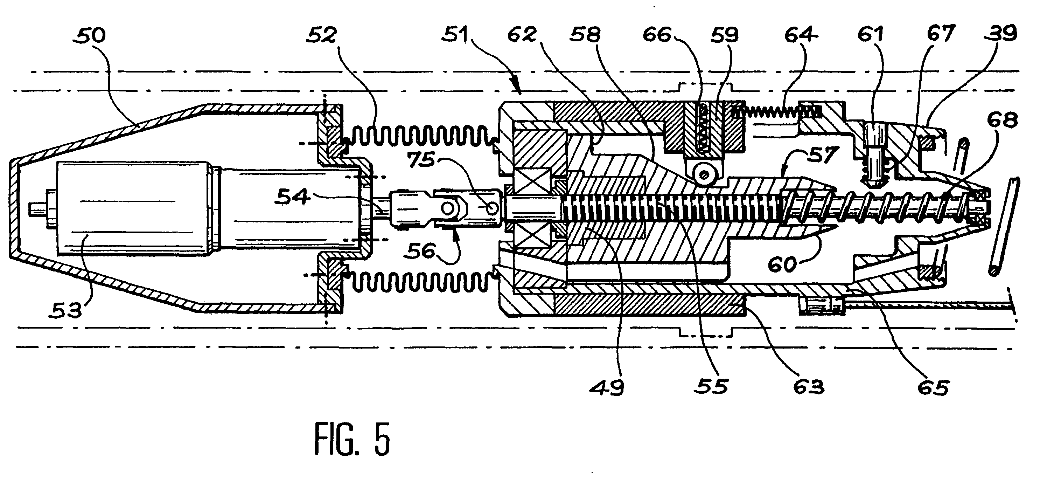

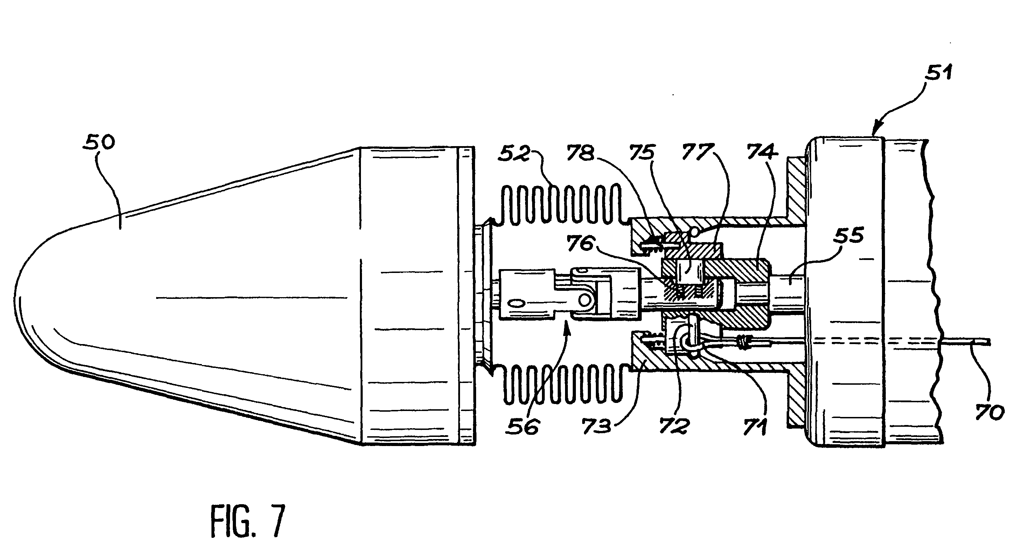

Voici maintenant la description de la figure 5 et du module d'alignement 2 du robot 1 dans la tuyauterie. Il comprend une tête conique 50 à l'avant, reliée à un corps principal 51 par un soufflet 52 et contenant un moteur 53 dont l'arbre 54 fait tourner une vis à billes 55 logée dans le corps principal 51 par l'intermédiaire d'un double cardan 56 qu'entoure le soufflet 52. Un écrou 49 entraîné par la vis à billes 55 dans l'axe de celle-ci entraîne une came 57 de forme complexe qui occupe la plus grande partie du corps principal 51. Elle comprend des pistes obliques principales 58 pour commander le déploiement de doigts 59 de serrage analogues à ceux (26) qu'on a vus dans le module d'encastrement 6, des pistes obliques secondaires 60 pour commander le déploiement de doigts 61 de connexion au module 3 suivant, et un épaulement 62 à l'arrière pour commander le déplacement vers l'arrière d'une peau d'enveloppe 63, porteuse des doigts 59, le long du principal corps 51. Ce déplacement est dirigé contre des ressorts 64 fixés à une enveloppe principale 65 du corps principal 51 et qui repoussent la peau d'enveloppe 63 vers l'avant ; on notera pour mémoire d'autres ressorts 66 et 67 qui rappellent les doigts 59 et 61 vers l'intérieur du corps principal 51 et un ressort 68 qui rappelle la came 57 vers l'avant. L'intérêt de ce montage original peut être compris facilement à la figure 6 : les doigts 59 se déployant entrent dans une rainure R à l'orée d'une portion avant A de la tuyauterie. Cette rainure R sert de repère à la progression du robot 1 dans la tuyauterie, en indiquant une position d'arrêt à laquelle un travail peut être effectué. Toutefois, la portion avant A peut ne pas être encore unie à la portion arrière B de la tuyauterie, si le travail à accomplir est un soudage de leur joint J.

Le premier effet du déplacement de la came 57 est donc d'encastrer le corps principal 5 du module d'alignement 2 dans la portion avant A de la tuyauterie et sur le module d'outil 3 en déployant les doigts 59 et 61 ; puis la butée de l'épaulement 62 sur la peau d'enveloppe 63 repousse celle-ci, les doigts 59 et enfin la portion avant A jusqu'à ce qu'elle touche la portion arrière B. Le joint J est alors formé devant le module d'outil 3, qui peut commencer de travailler. Le robot 1 convient ainsi pour assembler de l'intérieur toute une ligne de tuyaux. La souplesse du soufflet 52 et de la rotule 56 permet d'engager la tête conique 50 dans des tuyauteries avant A mal placées, que le mécanisme à la came 57 redresse ensuite.

Dans d'autres applications, les doigts 59 ne servent qu'à l'encastrement du train de modules 2 à 6 dans la tuyauterie, et l'outil du module 3 peut être une meule ou un couteau ou un capteur pour accomplir divers genres d'inspections ou d'usinages sur le joint J, ou pour le sectionner ; le module d'alignement 2 maintient alors la portion avant de la tuyauterie A après la section ; l'apparition d'un désalignement de la tuyauterie produit par les contraintes internes et qui se manifeste à la section au joint J n'est normalement pas à craindre car la raideur d'assemblage du train des modules 3 et de leur encastrement n'est pas telle qu'elle interdise toute déformation du robot 1.

Un autre aspect de l'invention, présent aussi sur le module d'alignement 2, sera maintenant décrit en référence à la figure 7. Il est relatif à la nécessité de commander le desserrage des doigts 59 et 61 même en cas de panne du moteur 53 de commande de la came 57 ou pour une autre raison. Une commande manuelle par un câble 70 parallèle aux câbles de raidissage 41 et dépassant comme eux à l'arrière de la tuyauterie est alors prévue. L'extrémité du câble 70 est enroulée en une boucle 71 autour d'un anneau de sûreté 72 qui maintient une bague mobile 77 près d'un épaulement 73 à l'extrémité du corps principal 51, malgré l'action de ressorts 78 comprimés entre l'épaulement 73 et la bague mobile 77.

Toutefois, une traction assez énergique sur le câble 70 suffit à arracher l'anneau de sûreté 72 de la gorge du corps principal 51 qui le retenait, ce qui libère la bague mobile 77 que les ressorts 78 repoussent vers l'arrière. Elle dégage une goupille 75 qui relie en rotation une bague fixe 74 solidaire de la vis à billes à l'axe de sortie du cardan 56 : un ressort 76 éjecte la goupille 75 et interrompt la liaison entre la vis à billes 55 du moteur 53 ; le ressort 68 peut alors se détendre en repoussant la came 57 vers l'avant, grâce à la réversibilité de la transmission entre la vis à billes 55 et l'écrou 56 ; et les ressorts 66 et 67 font se rétracter les doigts 59 et 61.

Un dispositif semblable est prévu pour les autres doigts de serrage. Revenant à la figure 3, on voit qu'il en existe un pour le module d'encastrement 6 : un câble 78 semblable au câble 70 et se terminant en boucle 79 autour d'un anneau de sûreté 80 permet d'arracher celui-ci quand il est tiré, ce qui libère la plaque de support 29 porteuse des moteurs 28 d'un bec 81 solidaire de l'enveloppe 25 du module. Des ressorts 83, précédemment comprimés entre la plaque porteuse 29 et des tablettes 84 fixées à l'enveloppe 25, se détendent alors pour repousser la plaque de support 29 vers l'arrière de manière à reculer les cames 31. La détente des ressorts 82 placée entre l'enveloppe 25 et les doigts 26 rétracte ceux-ci et libère le robot.

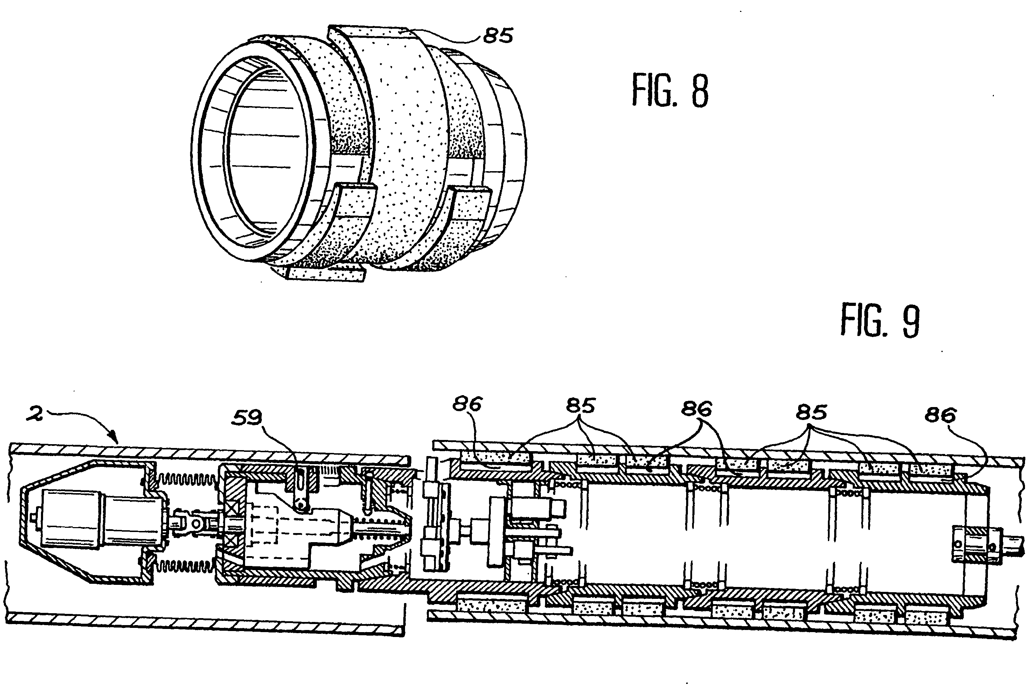

Les figures 8 et 9 montrent que d'autres moyens d'encastrement des modules sont concevables, et notamment des patins 85 à mémoire de forme qui peuvent prendre l'aspect de cerces discontinues autour des différents modules. Une pièce en alliage à mémoire de forme a la particularité de prendre deux- formes différentes en changeant de structure métallurgique à une température de transition, en reprenant une forme qui lui a été imposée après l'avoir chauffée au-delà de la température de transition à une étape préliminaire de fabrication. Ici, les patins 85 se redressent quelque peu au-delà de la température de transition, et leurs extrémités se coincent contre la face intérieure de la tuyauterie. En même temps, elles restent dans des gorges 86 des modules, ce qui les maintient bien en place. Des alimentations électriques non représentées produisent l'échauffement des patins 85. Ce système a l'avantage que l'interruption du courant électrique ramène forcément les patins 85 à leur forme initiale et libère le train de modules, et que les systèmes à câble de déblocage décrits à propos de la figure 7 deviennent inutiles. La figure 9 suggère cependant qu'il est indiqué de maintenir les doigts d'encastrement 59 du module d'alignement 2 qui servent aussi de référence de positionnement dans la rainure R de la tuyauterie pour toutes les tâches où il faut arrêter le robot à un endroit précis.

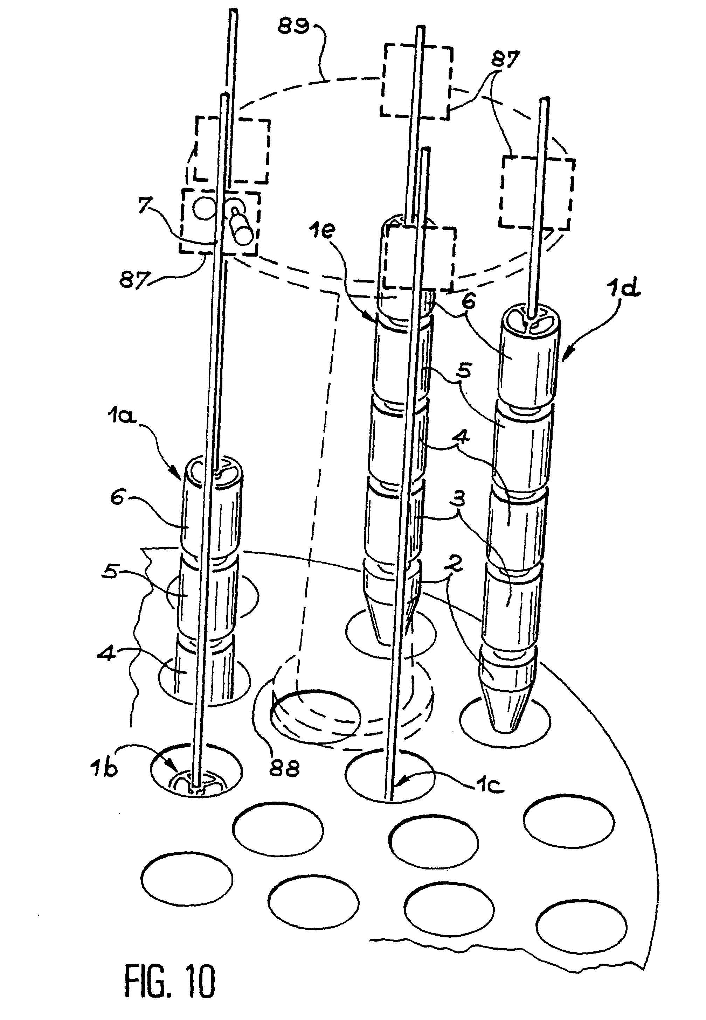

Il est évident que des outils de toutes natures peuvent être employés : le robot a plus précisément été développé pour des procédés qui impliquent cinq opérations sur la tuyauterie, à savoir du fraisage, du moletage, du pointage, du soudage et une inspection aux ultra-sons. On utilise alors avantageusement cinq trains de modules semblable, sauf pour le module d'outil 3, qui est différent à chaque fois. Comme le représente la figure 10, les trains 1a à le peuvent être suspendus en cercle à un barillet 86 par des mécanismes d'avance 87 indépendants et descendus successivement dans la ligne de tuyauteries à traiter après une rotation du barillet 86, qui tourne sur un socle 88. On peut concevoir, par exemple pour les générateurs de vapeur des centrales nucléaires qui comprennent un grand nombre de lignes de tuyauteries parallèles à traiter, que plusieurs de ces lignes peuvent être traitées à la fois mais avec un décalage de phase, en enfonçant simultanément plusieurs des trains de module dans des lignes différentes.

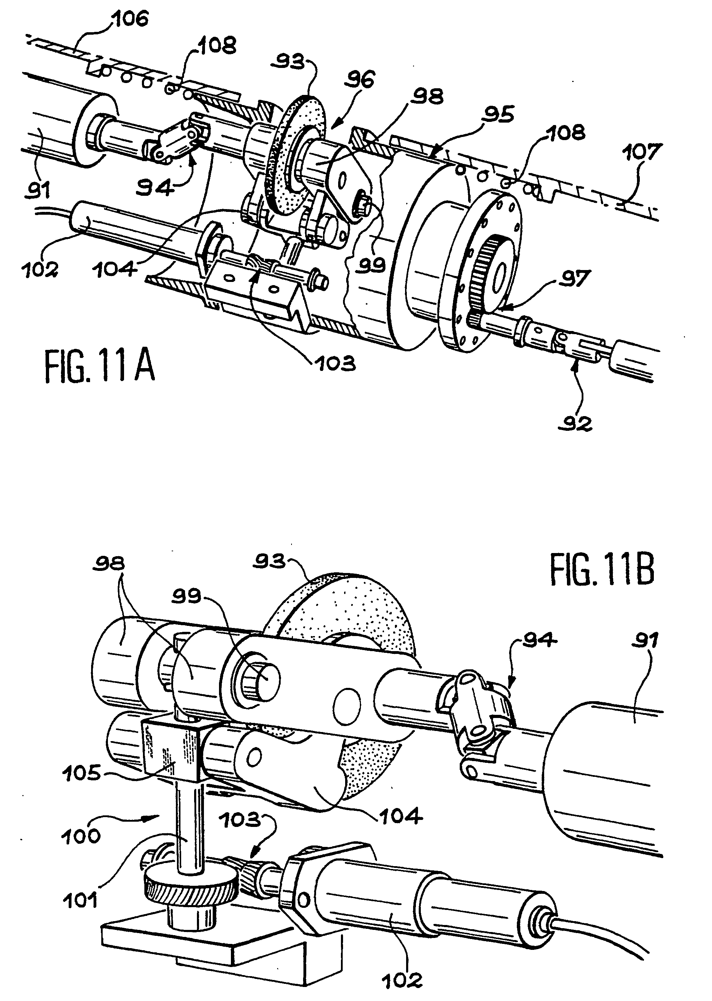

Les figures 11A et 11B montrent que les modules d'outil 3 comprennent généralement deux moteurs 91 et 92 de part et d'autre d'un outil 93 (ici, une fraise qui pourrait être remplacée par une meule circulaire) ; le premier de ces moteurs fait tourner l'outil 93 autour de son axe par l'intermédiaire d'un cardan 94, et le second fait tourner un boîtier cylindrique 95,hors d'une fente 96 duquel l'outil 93 fait saillie, autour de son axe par un engrenage 97. L'outil 93 est au bout d'un levier 98 pivotant autour d'un axe 99 excentré dans le boîtier 95 et que repousse un mécanisme de compas 100 à vis 101 actionnée par un troisième moteur 102 et un engrenage de liaison 103, et à culbuteur 104 dont les extrémités opposées sont articulées au levier 98 et à une noix 105 engagée dans la vis 101 ; par ailleurs, la vis 101 atteint l'axe 99. Les mouvements du moteur modifient donc la distance entre la noix 105 et l'axe 99 et l'angle du levier 98 et du culbuteur 104, ce qui fait tourner celui-là et fait sortir et rentrer l'outil 93 avant et après son travail sur un joint de tuyauteries.

La combinaison des trois mouvements de rotation de l'outil 93, de sortie de l'outil 93 et de rotation du boîtier 95 permet d'usiner des joints circulaires. On ne s'étendra pas plus sur ces engins pour usiner l'intérieur d'une tuyauterie, dont certains avaient déjà été conçus, mais on peut encore noter que le boîtier 95 s'étend entre deux demi-enveloppes 106 et 107 du module d'outil 3, qui se rapprochent à la compression des ressorts 38 jusqu'à buter contre le boîtier 95 tout en lui permettant de tourner. Des ressorts complémentaires 108 écartent les demi-enveloppes 106 et 107 quand les ressorts 38 sont relâchés.

## Revendications

1. Robot mobile en coulissant dans une tuyauterie ou un autre passage étroit, composé d'un train de modules (2 à 6, 10) reliés par des liaisons souples (38), **caractérisé en ce qu'**il comprend des moyens de solidarisation (41) des modules aptes à raidir le train.

2. Robot mobile selon la revendication 1, **caractérisé en ce que** certains au moins des modules comprennent des moyens d'encastrement (26, 59, 85) dans le passage.

3. Robot mobile selon la revendication 2, **caractérisé en ce que** les moyens d'encastrement consistent en des doigts actionnés par des surfaces pentues de cames (32) coulissant axialement dans les modules.

4. Robot mobile selon la revendication 3, **caractérisé en ce que** les surfaces des cames ont deux pentes différentes, dont une première (34), agissant d'abord sur les doigts, plus inclinée et une seconde (35) moins inclinée.

5. Robot mobile selon l'une quelconque des revendications 1 à 4, **caractérisé en ce qu'**il comprend un moyen de positionnement (59) dans une gorge du passage.

6. Robot mobile selon l'une quelconque des revendications 1 à 5, **caractérisé en ce qu'**un des modules est pourvu de moyens de solidarisation (59, 62, 63, 66) de deux portions consécutives de la tuyauterie.

7. Robot mobile selon les revendications 2, 5 et 6, **caractérisé en ce que** le moyen de positionnement et les moyens de solidarisation comprennent un des moyens d'encastrement (59), disposé sur une portion mobile axialement (63) du module, et **en ce que** les moyens de solidarisation comprennent encore une surface de came (62) repoussant la portion mobile axialement.

8. Robot mobile selon la revendication 2, **caractérisé en ce que** les moyens d'encastrement comprennent des patins à mémoire de forme (85).

9. Robot mobile selon l'une quelconque des revendications 1 à 8, **caractérisé en ce que** les moyens de solidarisation des modules comprennent au moins un câble (41) de tirage, accroché à un des modules (2), de tête du train, et antagoniste d'un moyen de propulsion (7, 10) placé à un des modules (6, 10), de queue du train.

10. Robot mobile selon l'une quelconque des revendications 1 à 9, **caractérisé en ce que** les modules sont reliés par des ressorts (38) que les moyens de solidarisation (41) compriment.

11. Robot mobile selon l'une quelconque des revendications 1 à 10, **caractérisé en ce que** les modules sont pourvus de surfaces coniques complémentaires d'emboîtement (39, 40).

12. Robot mobile selon l'une quelconque des revendications 2, 3, 4, 7 ou 8, **caractérisé en ce qu'**il comprend des mécanismes de sûreté manuels assurant le déblocage des moyens d'encastrement, comprenant un câble d'actionnement et des ressorts de rappel des moyens d'encastrement.

## Patentansprüche

1. Mobiler Roboter für Arbeiten in Rohrleitungen oder anderen engen Passagen, gebildet durch einen Zug von Modulen (2 bis 6, 10), verbunden durch flexible Verbindungen (38),
**dadurch gekennzeichnet, dass** er Verbindungseinrichtungen (41) der Module umfasst, die fähig sind, den Zug zu versteifen.

2. Mobiler Roboter nach Anspruch 1, **dadurch gekennzeichnet, dass** wenigstens einige der Module Einrichtungen (26, 59, 85) umfassen, die dem Festspannen in der Passage dienen.

3. Mobiler Roboter nach Anspruch 2, **dadurch gekennzeichnet, dass** die Festspanneinrichtungen durch Finger gebildet werden, betätigt durch geneigte Nockenflächen (32), die sich in den Modulen axial verschieben lassen.

4. Mobiler Roboter nach Anspruch 3, **dadurch gekennzeichnet, dass** die Nockenflächen zwei unterschiedliche Neigungen aufweisen, von denen eine zuerst auf die Finger wirkende erste (34) mehr geneigt ist, und eine zweite (35) weniger geneigt ist.

5. Mobiler Roboter nach einem der Ansprüche 1 bis 4, **dadurch gekennzeichnet, dass** er eine Einrichtung (59) zur Positionierung in einer Kehle bzw. Rille der Passage umfasst.

6. Mobiler Roboter nach einem der Ansprüche 1 bis 5, **dadurch gekennzeichnet, dass** einer der Module mit Verbindungseinrichtungen (59, 62, 63, 66) zweier aufeinanderfolgender Teile der Rohrleitung ausgerüstet ist.

7. Mobiler Roboter nach den Ansprüchen 2, 5 und 6, **dadurch gekennzeichnet, dass** die Positionierungseinrichtungen Festspanneinrichtungen (59) umfassen, angeordnet in einem axial beweglichen Teil (63) des Moduls, und dadurch, dass die Verbindungseinrichtungen auch noch eine Nockenfläche (62) umfassen, die das bewegliche Teil zurück bzw. nach außen drücken.

8. Mobiler Roboter nach Anspruch 2, **dadurch gekennzeichnet, dass** die Festspanneinrichtungen Formgedächtnis-Gleitsegmente (85) umfassen.

9. Mobiler Roboter nach einem der Ansprüche 1 bis 8, **dadurch gekennzeichnet, dass** die Verbindungseinrichtungen der Module wenigstens ein Zugkabel (41) umfassen, das an einem der Module (2) des Kopfs des Zuges befestigt ist und einer Antriebseinrichtung (7, 10) entgegenwirkt, angebracht an einem der Module (6, 10) am Ende des Zuges.

10. Mobiler Roboter nach einem der Ansprüche 1 bis 9, **dadurch gekennzeichnet, dass** die Module durch Federn (38) verbunden sind, welche die Verbindungseinrichtungen (41) komprimieren.

11. Mobiler Roboter nach einem der Ansprüche 1 bis 10, **dadurch gekennzeichnet, dass** die Module komplementäre konische Einfügungsflächen (39, 40) aufweisen.

12. Mobiler Roboter nach einem der Ansprüche 2, 3, 4, 7 oder 8, **dadurch gekennzeichnet, dass** er manuelle Sicherheitsmechanismen zur Entblockierung der Einfügungseinnchtungen umfasst, die ein Betätigungskabel und Rückstellfedern der Einfügungseinrichtungen umfassen.

## Claims

1. Robot free to slide inside pipework or another narrow passage, composed of a train of modules (2 to 6, 10) connected by flexible links (38), **characterized in that** it comprises means of fixing (41) modules to each other to stiffen the train.

2. Mobile robot according to claim 1, **characterized in that** at least some of the modules comprise means (26, 59, 85) for immobilising in the passage.

3. Mobile robot according to claim 2, **characterized in that** the immobilisation means consist of pins activated by sloping cam surfaces (32) sliding axially in the modules.

4. Mobile robot according to claim 3, **characterized in that** the cam surfaces have two different slopes, including a first slope (34) which is more inclined and firstly acting on the pins and a second, less inclined slope (35).

5. Mobile robot according to any one of claims 1 to 4, **characterized in that** it comprises positioning means (59) in a groove of the passage.

6. Mobile robot according to any one of claims 1 to 5, **characterized in that** one of the modules is provided with means (59, 62, 63, 66) of fixing two consecutive portions of pipework.

7. Mobile robot according to claims 2, 5 and 6, **characterized in that** the positioning means and the fixing means comprise one of the immobilisation means (59) fitted on an axially mobile portion (63) of the module, and **in that** the fixing means also comprise a cam surface (62) pushing the axially mobile portion.

8. Mobile robot according to claim 2, **characterized in that** the immobilisation means comprise shape memory pads (85).

9. Mobile robot according to any one of claims 1 to 8, **characterized in that** the module fixing means comprise at least one pulling cable (41), attached to one of the train head modules (2), and opposing propulsion means (7, 10) located on one of the train tail modules (6, 10).

10. Mobile robot according to any one of claims 1 to 9, **characterized in that** the modules are connected together by springs (38) compressed by the fixing means (41).

11. Mobile robot according to any one of claims 1 to 10, **characterized in that** the modules are provided with complementary conical engagement surfaces (39, 40).

12. Mobile robot according to any one of claims 2, 3, 4, 7 or 8, **characterized in that** it comprises manual safety mechanisms to release the immobilisation means, comprising an activation cable and return springs acting on the immobilisation means.
